# EUROPÄISCHE PATENTSCHRIFT

(11) **EP 3 536 494 B1**
(45) Veröffentlichungstag und Bekanntmachung des Hinweises auf die Patenterteilung: **25.06.2025**
(21) Anmeldenummer: 19154980.7
(22) Anmeldetag: 01.02.2019
(51) Int. Cl.: B32B 5/02, B32B 5/16, B32B 5/18, B32B 5/22, B32B 7/12, B32B 37/14

(54) **EINSTUFIGES FÜGEVERFAHREN FÜR VERBUNDKÖRPER AUS FASERVERSTÄRKTEM BAUTEIL UND AEROGEL**
ONE-STEP JOINING METHOD FOR FIBRE-REINFORCED COMPOSITE COMPONENT AND AEROGEL
PROCÉDÉ D'ASSEMBLAGE EN UNE SEULE ÉTAPE POUR CORPS COMPOSITES DE COMPOSANT RENFORCÉ PAR DES FIBRES ET D'AÉROGEL

(30) Priorität: 09.03.2018 DE 102018105451
(43) Veröffentlichungstag der Anmeldung: 11.09.2019
(73) Patentinhaber: Deutsches Zentrum für Luft- und Raumfahrt e.V., 51147 Köln (DE)
(72) Erfinder: Niemeyer, Philipp David, 53177 Bonn (DE); Schestakow, Maria, 46282 Dorsten (DE); Milow, Barbara, 50354 Hürth (DE)
(74) Vertreter: dompatent von Kreisler Selting Werner - Partnerschaft von Patent- und Rechtsanwälten mbB

(56) Entgegenhaltungen:
- WO-A1-98/32709
- DE-A1- 102013 106 270
- US-A1- 2013 344 279
- DATABASE WPI Week 201762, Derwent World Patents Index; AN 2017-579348, XP002791617

## Beschreibung

Die vorliegende Erfindung betrifft ein Verfahren zu Herstellung eines Verbundkörpers, der Aerogel und ein faserverstärktes Bauteil umfasst, wobei zunächst ein Fasermaterial in Form eines textilen Halbzeugs lose mit einem Aerogelmaterial in Kontakt gebracht und anschließend beide Bestandteile mit einem flüssigen Bindemittel getränkt werden und durch Aushärten des Bindemittels ein vollständiger Verbundkörper erhalten wird.

Aerogele sind hochporöse Festkörper, deren Volumen zum größten Teil aus Poren besteht. Als Werkstoff sind sie seit langem bekannt. Sie zeichnen sich durch eine sehr geringe Dichte, eine hohe spezifische Oberfläche, niedrige Wärmeleitfähigkeit sowie eine hohe akustische Impedanz aus.

Aerogele sind aus unterschiedlichen Materialien bekannt. Häufig verbreitet sind Aerogele auf Silikatbasis. Beschrieben sind jedoch auch Aerogele aus Metalloxiden oder organische Aerogele, wie beispielsweise auf der Basis von Resorcin-Formaldehyd. Weitere organische Aerogele auf der Basis Melamin-Formaldehyd, Cellulose oder Alginat wurden ebenfalls beschrieben. Die Synthese von Aerogelen erfolgt typischerweise mittels eines Sol-Gel-Prozesses, welcher im Falle Polysaccharid-basierter Aerogele einem modifizierten Prozess folgt.

Aus dem Stand der Technik sind Aerogel-Aerogel-Verbundkörper sowie Aerogel-Bauteil-Verbundkörper bekannt, die mithilfe von mehrstufigen Verfahren unter Verwendung von Aerogelgranulaten oder Aerogel-Waben und Aerogel-Faser-Verbundkörpern hergestellt werden.

DE 10 2013 106 270 A1 offenbart ein Verfahren zur Herstellung einer Dämmschicht zur Ausbildung einer Wärme- und/oder Schallabschirmeinrichtung aufweisend die Schritte: a. Bereitstellung eines Fasern aufweisenden mattenartigen textilen Schichtmaterials oder Bereitstellen des Fasern aufweisenden textilen Schichtmaterials als Vorformling; b. Bereitstellen eines zur Ausbildung eines Aerogels geeigneten Stoffes (Sol) in der flüssigen Phase; c. Tränken des Schichtmaterials oder den Vorformling mit dem flüssigen Sol; d. Formgebung des getränkten Schichtmaterials oder Endformgebung des Vorformlings in einer Form; e. Gelierung des Sols zur Bildung eines mit Gel durchsetzten textilen Schichtmaterials und f. Trocknung des mit Fasern des textilen Schichtmaterials durchsetzten Gels unter Ausbildung eines mit Fasern des Schichtmaterials durchsetzten Aerogels.

DE 102 59 487 A1 beschreibt ein Verfahren zum Herstellen einer Isolationsschicht für ein thermisch belastetes Bauteil, bei dem ein Gemisch aus hydrophoben Aerogelpartikeln und einem auf der Bauteiloberfläche haftenden Bindemittel in Form eines Sprühnebels auf das Bauteil aufgetragen und anschließend die Isolationsschicht mit einer wärmestrahlreflektierenden, metallischen Deckschicht belegt wird.

Aus DE 196 22 865 A1 ist ein Verbundmaterial bekannt, das 5 bis 97 Vol.-% Aerogel-Partikel und mindestens einen Klebstoff enthält und das dadurch gekennzeichnet ist, dass der Teilchendurchmesser der Aerogel-Partikel kleiner als 0,5 mm ist. Weiterhin wird ein Verfahren zur Herstellung des Verbundmaterials sowie seine Verwendung offenbart.

WO 1998/032602 A1 beschreibt mehrschichtige Verbundmaterialien, die mindestens eine aerogelhaltige Schicht und mindestens eine Schicht, die Polyethylenterephthalat-Fasern enthält, aufweisen, ein Verfahren zu ihrer Herstellung sowie ihre Verwendung.

WO 98/32709 A1 beschreibt mehrschichtige Verbundmaterialien, die mindestens eine aerogelhaltige Schicht und mindestens eine weitere Schicht aufweisen, wobei die mindestens eine aerogelhaltige Schicht noch mindestens ein Bindemittel enthält, Verfahren zu ihrer Herstellung sowie ihre Verwendung.

US 2013/344279 A1 offenbart eine flexible isolierende Struktur, umfassend:
(a) eine Watte;
(b) eine Mischung aus Aerogel-enthaltenden Teilchen und einem Bindemittel, wobei die Aerogel-enthaltenden Teilchen mindestens eine Schicht der Watte imprägnieren.

WO2017/142244 A1 beschreibt ein Verfahren zur Herstellung einer Verbundfolie, die eine Aerogelfolie umfasst. Das Verfahren kann die folgenden Schritte umfassen: Herstellen einer Aerogelfolie (30) (S10); Laminieren von Faserplatten (10) auf beiden Seiten der Aerogelfolie (30) (S20); und Verbinden der laminierten Aerogelfolie (30) und der Faserfolien (10) durch Wärme und Druck, um eine Verbundfolie (40) herzustellen, bei der die Faserfolie (10), die Aerosolfolie (30) und die Faserfolie (10) laminiert sind nacheinander (S30).

Bei den aus dem Stand der Technik bekannten Verfahren zur Herstellung von Aerogel-Verbundkörpern handelt es sich um mehrstufige Prozesse unter Verwendung von mehr als vier Komponenten. Die Prozesstechnik gilt als aufwändig und nicht anwendungsorientiert. Zudem besitzen die aus dem Stand der Technik bekannten Verbundkörper eine äußerst geringe mechanische Stabilität zwischen Aerogel und Bauteil.

Der vorliegenden Erfindung liegt daher die Aufgabenstellung zugrunde, ein einstufiges Verfahren zur Herstellung eines Verbundkörpers aus Aerogel und faserverstärktem Bauteil bereitzustellen und somit die aus dem Stand der Technik bekannten Verfahren im Hinblick auf die Prozesstechnik zu verbessern. Darüber hinaus sollen Verbundkörper bereitgestellt werden, die sich durch eine hohe mechanische Stabilität zwischen Bauteil und Aerogel auszeichnen.

In einer ersten Ausführungsform wird diese Aufgabenstellung gelöst durch ein Verfahren zur Herstellung eines Verbundkörpers, der Aerogel und ein faserverstärktes Bauteil umfasst, umfassend die folgenden Schritte:
i) Bereitstellen mindestens eines textilen Halbzeugs,
ii) Kontaktieren des mindestens einen textilen Halbzeugs mit mindestens einem Aerogelmaterial,
iii) Infiltrieren des eingesetzten textilen Halbzeugs, und gegebenenfalls teilweises Infiltrieren der eingesetzten Aerogelmaterialien, mit einem flüssigen Bindemittel und
iv) Aushärten des Bindemittels.

Das erfindungsgemäße Verfahren zeichnet sich insbesondere dadurch aus, dass es nur einen Prozessschritt benötigt, um gleichzeitig das faserverstärkte Bauteil zu generieren sowie die kraftschlüssige Verbindung zwischen Bauteil und Aerogel herzustellen. Dies wird erreicht, indem ein textiles Halbzeug und ein Aerogelmaterial gleichzeitig mit einem flüssigen Bindemittel infiltriert werden. Beim Aushärten des Bindemittels entsteht das faserverstärkte Bauteil, beispielsweise in Form eines faserverstärkten Kunststoffs, wobei die Bindemittelmatrix des Bauteils gegebenenfalls in die Oberfläche des Aerogelmaterials hineinragt und damit einen kraftschlüssigen Verbund sicherstellt. Damit wird die Prozesstechnik zur Herstellung von Aerogel-Bauteil-Verbundkörpern gegenüber dem Stand der Technik vereinfacht.

Durch die kraftschlüssige und chemische Integration zwischen Bauteil und Aerogel wird zudem eine hohe mechanische Stabilität zwischen Aerogel und Bauteil erreicht.

Erfindungsgemäß wird zunächst mindestens ein textiles Halbzeug, das den Faserbestandteil des faserverstärkten Bauteils bilden soll, bereitgestellt. Es können auch mehrere textile Halbzeuge bereitgestellt werden, wenn der fertige Verbundkörper mehrere faserverstärkte Bauteile umfassen soll. In einem nächsten Schritt werden das eine oder die mehreren textile(n) Halbzeug(e) mit mindestens einem Aerogelmaterial in Kontakt gebracht. Dabei wird zunächst eine lose Verbindung zwischen dem/n textilen Halbzeug(en) und dem/n Aerogelmaterial(ien) hergestellt.

Beispielsweise kann ein einzelnes textiles Halbzeug vorgelegt und dieses mit einem einzelnen Aerogelmaterial in Kontakt gebracht werden. Hierzu kann zum Beispiel das Aerogelmaterial auf das textile Halbzeug lose aufgelegt werden. Mit dem erfindungsgemäßen Verfahren wird dann ein zweischichtiger Verbund aus faserverstärktem Bauteil und Aerogelmaterial erhalten. Werden mehrere textile Halbzeuge und/oder mehrere Aerogelmaterialien eingesetzt, können eine Vielzahl von Schichtstrukturen erhalten werden, in denen beispielsweise alternierend faserverstärkte Bauteile und Aerogelmaterialien angeordnet sind, wobei jeweils gleiche oder unterschiedliche Materialien zum Einsatz kommen können. Die Erfindung ist jedoch nicht auf Verfahren zur Herstellung solcher Schichtstrukturen beschränkt. Es können auch Verbundkörper hergestellt werden, in denen zwei Schichten aus faserverstärkten Bauteilen und/oder zwei Schichten aus Aerogelmaterialien in Kontakt stehen. Erfindungsgemäß wird jedoch mindestens ein flächiger Kontakt zwischen mindestens einem textilen Halbzeug und mindestens einem Aerogelmaterial hergestellt.

Bevorzugt werden textile Halbzeuge mit Schichtdicken von 0,1 bis 2 mm eingesetzt. Besonders bevorzugt sind Schichtdicken von 0,4 bis 1 mm und ganz besonders bevorzugt von 0,5 bis 0,9 mm. Die Schichtdicke richtet sich gegebenenfalls nach der Art des textilen Halbzeugs (Gewebe, Gewirke, etc. sowie Anzahl der Lagen). Bevorzugt werden Aerogelmaterialien mit Schichtdicken von 2 bis 50 mm eingesetzt. Besonders bevorzugt sind Schichtdicken von 5 bis 20 mm und ganz besonders bevorzugt von 10 bis 15 mm. Es ist insbesondere bevorzugt, dass das Aerogelmaterial eine wesentlich größere Schichtdicke als das textile Halbzeug aufweist. Zweck ist dabei die Erhaltung der Aerogelstruktur im finalen Verbund während die vollständige Durchtränkung des textilen Halbzeugs zu gewährleisten ist. Bevorzugt beträgt das Verhältnis der Schichtdicken aller Aerogelschichten zu den Schichtdicken aller Schichten aus textilen Halbzeugen mehr als 5:1 bis zu 25:1, besonders bevorzugt mehr als 10:1 bis zu 20:1, ganz besonders bevorzugt mehr als 12:1 bis zu 15:1.

In einer bevorzugten Ausführungsform werden zwei textile Halbzeuge mit einem Aerogelmaterial so in Kontakt gebracht, dass die textilen Halbzeuge das Aerogelmaterial in Form eines Sandwiches einschließen. Es kann beispielsweise ein textiles Halbzeug vorgelegt werden. Auf dieses kann ein Aerogelmaterial aufgelegt werden. Anschließend wird ein weiteres textiles Halbzeug auf das Aerogelmaterial aufgelegt.

Zusätzlich zu dem textilen Halbzeug und dem Aerogelmaterial können auch weitere Materialien eingebracht werden, sodass der erfindungsgemäß hergestellte Verbundkörper gegebenenfalls weitere Schichten enthält. Insbesondere kann beispielsweise Blech oder eine Folie, insbesondere aus Metall, eingebracht werden. Bevorzugt ist eine Metallfolie, an der das eingesetzte Bindemittelsystem, insbesondere ein Kunstharzsystem, gut haftet. Besonders bevorzugt wird eine Aluminiumfolie eingesetzt. Anstelle einer Metallfolie kann auch beispielsweise ein Lochblech, eine Lochfolie oder ein Metallgewirke eingesetzt werden.

Eine Metallfolie, insbesondere eine Aluminiumfolie, kann beispielsweise mit mindestens einem textilen Halbzeug in Kontakt gebracht werden, welches seinerseits mit mindestens einem Aerogelmaterial in Kontakt steht, sodass der Verbundkörper eine Schichtfolge Aluminiumfolie-faserverstärktes Bauteil-Aerogel aufweisen kann. Möglich ist es aber beispielsweise ebenfalls, dass eine Metallfolie mit dem Aerogelmaterial in Kontakt gebracht wird. Als Schichtfolge kann sich beispielsweise faserverstärktes Bauteil-Aerogel-Aluminiumfolie oder auch faserverstärktes Bauteil-Aerogel-Aluminiumfolie-faserverstärktes Bauteil ergeben, ohne dass die Erfindung auf diese Varianten beschränkt wäre.

Als textiles Halbzeug können beliebige aus dem Stand der Technik bekannte Textilmaterialien eingesetzt werden. Bevorzugt werden Gelege, Flor- und Polgewebe, Geflechte, Vliese, Gewebe, Gewirke, Gestricke, Stapelfasern oder Gemische davon eingesetzt. Besonders bevorzugt sind mehraxiale Gelege. Diese weisen den besonderen Vorteil auf, dass für ein krafttragendes Bauteil die Richtung der Fasern gezielt definiert werden kann.

In dem textilen Halbzeug kann jedes aus dem Stand der Technik bekannte Fasermaterial eingesetzt werden. In einer bevorzugten Ausführungsform umfasst das textile Halbzeug Naturfasern, polymere Fasern, mineralische Fasern, Kohlefasern oder deren Mischungen. Geeignete Naturfasern umfassen insbesondere Jute, Flachs, Sisal, Hanf, Cellulose oder der deren Mischungen und Hybridgarne. Als polymere Fasern können insbesondere Polyester, Polyamide, Polylactide oder deren Mischungen zum Einsatz kommen. Geeignete mineralische Fasern umfassen insbesondere Glasfasern, oxidkeramische-Fasern wie Al₂O₃, Siliziumdioxid, Siliziumcarbide, Zirkoniumoxide oder deren Mischungen. Besonders bevorzugt sind Kohlefasern. Auch Keramikfasern können erfindungsgemäß eingesetzt werden.

Als Aerogelmaterial können sämtliche aus dem Stand der Technik bekannte Aerogelmaterialien eingesetzt werden. Bevorzugt können offenporige Körper insbesondere auf Basis von Polysacchariden, Duroplasten, Metalloxiden, Halbmetalloxiden und/oder Übergangsmetalloxiden eingesetzt werden. Geeignete Polysaccharide umfassen beispielsweise Cellulose, Chitosan, Chitin, Alginat, Stärke, Pektin, oder auch Peptide, und deren Mischungen. Als Duroplasten können beispielsweise Resorcinol-Formaldehyd, Melamin-Formaldehyd, Polyurethane, Polyamide, Polyimide und Polyacrylate, sowie ihre carbonisierten Vertreter: Kohlenstoff-Aerogele oder deren Mischungen eingesetzt werden. Geeignete Metall-, Halbmetall- und Übergangsmetalloxide umfassen insbesondere Eisenoxide, Kupferoxide, Aluminiumoxide, Titanoxide, Zirkoniumoxide, Zinnoxide oder deren Mischungen. Auch Mischungen untereinander, beispielsweise Hybrid-Aerogele, Silica-Blends und Komposite mit anteilig organischem Skelett können kombiniert werden. Besonders bevorzugt werden Aerogele auf Basis von Silica, Resorcin-Formaldehyd und/oder Cellulose eingesetzt. Ganz besonders bevorzugt sind Aerogele auf Basis von Silica.

Als Aerogelmaterial wird in einer bevorzugten Ausführungsform ein monolithischer Aerogelkörper eingesetzt. Ein solcher zeichnet sich durch seine Homogenität und feste Form aus. Insbesondere ist ein monolithischer Aerogelkörper geeignet, wenn das erfindungsgemäße Verfahren zur Herstellung eines zweischichtigen Aufbaus eingesetzt wird und nur ein textiles Halbzeug mit einem monolithischen Aerogelmaterial in Kontakt gebracht wird. Das monolithische Aerogelmaterial bildet in diesem Fall eine Außenschicht des erhaltenen Verbundkörpers, weshalb die feste Form beziehungsweise der feste Zusammenhalt eines monolithischen Aerogels von Vorteil ist.

In einer alternativen Ausführungsform kann jedoch auch ein Aerogelgranulat als Aerogelmaterial eingesetzt werden. Insbesondere wenn zwei textile Halbzeuge ein Aerogelmaterial in Form eines Sandwiches umschließen, kann ein Aerogelgranulat eingesetzt werden. Das flüssige Bindemittel kann dann die textilen Halbzeuge sowie teilweise das Aerogelgranulat infiltrieren. Nach dem Aushärten wird ein Verbundkörper erhalten, der besonders stabil ist, wobei das Aerogelgranulat fest zwischen dem gebildeten faserverstärkten Bauteil eingeschlossen ist und somit in Form gehalten wird.

Unter teilweiser Infiltration des Aerogelgranulats mit dem flüssigen Bindemittel wird die teilweise Infiltration des Volumens der einzelnen Granulatkörner verstanden. Davon unabhängig kann auch der Raum zwischen den Granulatkörnern, der einen Teil der Aerogelgranulatschicht bildet, ganz oder teilweise mit dem flüssigen Bindemittel infiltriert werden. Als Bindemittel können an dieser Stelle auch schäumende Bindemittel (z.B. auf Polyurethan-Basis) Anwendung finden.

In einer weiteren alternativen Ausführungsform kann auch ein Aerogelgranulat in Kombination mit einem einzelnen textilen Halbzeug in einem zweischichtigen Verbund eingebracht werden. In dieser Ausführungsform ist vorzugsweise der Raum zwischen den Granulatkörnern vollständig mit dem flüssigen Bindemittel infiltriert, um einen festen Verbund bereitzustellen. Ein derartiger zweischichtiger Verbund weist den besonderen technischen Vorteil auf, dass er eine einseitige Granulatbindung ermöglicht. Die Eigenschaften des Granulats bleiben somit auf einer freiliegenden Oberfläche erhalten.

Insbesondere wenn ein eingesetztes Aerogelgranulat vollständig von einem oder mehreren textilen Halbzeugen umgeben ist, kann auch lediglich eine teilweise Infiltration des Raums zwischen den Granulatkörnern mit dem flüssigen Bindemittel erfolgen. In jedem Fall sollten die Granulatkörner fixiert sein.

In der folgenden Tabelle sind einige Eigenschaften einiger einsetzbarer Aerogelmaterialien beispielhaft aufgeführt:

| Eigenschaft | Cellulose Aerogel | Silica Aerogel | Silica Aerogel Granulat | Superflexibler Komposit auf Silica Aerogel Basis^{a} | Resorcin-Formaldehyd Aerogel |
|---|---|---|---|---|---|
| | | | | | |
| Umhüllende Dichte [g/cm³] | 0,04-0,2 | 0,05-0,2 | 0,07-0,15 | 0,08-0,15 | 0,06-0,4 |
| Skeletale Dichte [g/cm³] | 1.5 | 1,7-2,5 | 1.6 | 2.7 | 1,4-1,5 |
| Porosität [vol.-%] | 80-99 | 85-98 | 90-98 | 90-97 | 70-96 |
| Temperaturstabilität [°C] | 180-220 | 600 | 600 | 350-400 | 150-180 |
| Spezifische Oberfläche [m²/g] | 80-500 | 600-1100 | 600-1100 | - | 0-500 |
| Durchmesser sekundärer Partikel oder Fibrillen [nm] | 5-30 | 3-100 | 3-100 | 100-5000 | 50-5000 |
| Wärmeleitfähigkeit bei 20°C [W/(m*K)] | 0,02-0,1 | 0,012-0,018 | 0,017-0,023 | 0,03-0,08 | 0,009-0,06 |

| | | | | | |
|---|---|---|---|---|---|
| ^{a}Dieses Material ist in DE 10 2015 200 191 A1 beschrieben. | | | | | |

In einer weiteren bevorzugten Ausführungsform enthält das eingesetzte Aerogelmaterial Fasern und/oder textile Erzeugnisse. Insbesondere kann das Aerogelmaterial Fasern und/oder textile Erzeugnisse enthalten, die aus der Oberfläche des Aerogels herausragen. In diesem Fall wird das Aerogelmaterial bevorzugt so mit dem textilen Halbzeug in Kontakt gebracht, so dass die Fasern aus dem Aerogelmaterial mit den Fasern des textilen Halbzeugs in Kontakt treten.

Die Fasern und/oder textilen Erzeugnisse überragen die Oberfläche des Aerogelmaterials bevorzugt um eine kurze Distanz, insbesondere eine Distanz von wenigen Millimetern. Besonders bevorzugt überragen die Fasern und/oder textilen Erzeugnisse das Aerogelmaterial um 0,5 bis 30 mm, ganz besonders bevorzugt um 2 bis 5 mm. Der Überstand ist dabei der Höhe des verwendeten Aerogelmaterials anzupassen, gegebenenfalls sollte eine geringfügige Überlappung möglich sein um ein vollständiges Umschließen des Kernmaterials zu gewährleisten.

Geeignete textile Erzeugnisse umfassen bevorzugt Gelege, Geflechte, Vliese, Gewebe (einschließlich Flor- und Polgewebe), Gestricke, Stapelfasern oder Gemische davon. Insbesondere wenn als Aerogelmaterial ein Aerogelgranulat eingesetzt wird, werden bevorzugt Stapelfasern eingesetzt. Ein solches Gemisch aus Aerogelgranulat und Stapelfasern kann beispielsweise zwischen 0,1 und 75 Volumenprozent Stapelfasern enthalten. Bevorzugt liegt der Gehalt an Stapelfasern bei 5 bis 25 Volumenprozent bezogen auf das Volumen des verwendeten Aerogelgranulats.

Wie bereits zuvor beschrieben, sollte ein gegebenenfalls eingesetztes Aerogelgranulat fixiert werden. Neben der zuvor beschriebenen Fixierung durch vollständige oder teilweise Infiltration mit dem flüssigen Bindemittel oder durch vollständiges Umgeben mit einem oder mehreren textilen Halbzeugen, kann die Fixierung auch beispielsweise durch den Einsatz von Stapelfasern erfolgen.

Als Fasermaterial der textilen Erzeugnisse kann jedes aus dem Stand der Technik bekannte Fasermaterial eingesetzt werden. Bevorzugt werden Naturfasern, polymere Fasern, mineralische Fasern, keramische Fasern oder deren Gemische eingesetzt. Geeignete Naturfasern umfassen insbesondere Baumwolle, Jute, Flachs, Hanf, Cellulose oder deren Mischungen. Als thermoplastbasierte polymere Fasern können insbesondere Polyester, Polyethylenterephthalate, Polyimide, Polyacrylate, Polyamide, Polyolefine, Polycarbonate, Polystyrole, Polyvinylalkohole, oder deren Mischungen zum Einsatz kommen. Geeignete mineralische Fasern umfassen insbesondere Glasfasern, oxidkeramische-Fasern wie Al₂O₃, Siliziumdioxid, Siliziumcarbide, Zirkoniumoxide oder deren Mischungen.

In einer besonders bevorzugten Ausführungsform wird als Aerogelmaterial ein flexibler Verbundkörper auf Basis von Aerogelen, wie er beispielsweise aus DE 10 2015 200 191 A1 bekannt ist, eingesetzt.

Enthält das Aerogelmaterial Fasern und/oder textile Erzeugnisse, die aus der Oberfläche des Aerogels herausragen und mit den Fasern des textilen Halbzeug in Kontakt stehen, wird mit dem erfindungsgemäßen Verfahren ein besonders stabiler Verbundkörper erhalten. Dies wird dadurch erreicht, dass die Fasern beziehungsweise textilen Erzeugnisse einerseits fest mit dem Aerogelmaterial verbunden sind, andererseits aber auch ein integraler Bestandteil des generierten faserverstärkten Bauteils werden. Mit dem erfindungsgemäßen Verfahren wird dann ein kraftschlüssig und chemisch integrierter Verbundkörper erhalten.

In einer bevorzugten Ausführungsform bringt man mindestens ein textiles Halbzeug mit mindestens einem Aerogelmaterial in einer Form in Kontakt. Hierzu kann außerhalb der Form eine lose Schichtung der Materialien gebildet und diese dann in die Form eingebracht werden. Bevorzugt ist allerdings, das mindestens ein textiles Halbzeug und das mindestens ein Aerogelmaterial nacheinander in die Form einzubringen und so den Kontakt innerhalb der Form herzustellen.

Erfindungsgemäß besteht die Form aus einem chemisch gegenüber dem eingesetzten Bindemittel resistenten Material. Ein geeigneter Formwerkstoff ist beispielsweise Polytetrafluorethylen (PTFE) oder Metall, welches gegebenenfalls zuvor mit einem geeigneten Trennmittel präpariert wurde. Im Falle UVhärtender Harz-Systeme können auch UV-transparente Werkzeuge genutzt werden, beispielsweise aus Polymethylmethacrylat (PMMA) sowie weitere acrylatbasierte Kunststoffe. Im Falle IR-härtender Bindemittel können gegebenenfalls Polycarbonat-Werkzeuge genutzt werden. Prinzipiell kann die Form aber aus jedem aus dem Stand der Technik bekannten Material bestehen, das inert gegenüber dem Bindemittelsystem ist.

Nach dem Einbringen von textilem Halbzeug und Aerogelmaterial in die Form kann diese geschlossen werden. Die Form kann beispielsweise geschlossen werden, indem ein Gegenstück des Werkzeugs aufgelegt oder ein gasdichter Verschluss mittels Vakuumfolien (gegebenenfalls auch Membranen wie in WO 2009/092543 A1 beschrieben) nach Niederdruck-Infiltration verwendet wird.

Die geschlossene Form kann vorgewärmt werden, insbesondere auf eine für das Bindemittel relevante Temperatur. Ebenso kann die Form evakuiert und/oder mit Druck beaufschlagt werden. Der beaufschlagte Druck sollte bei steifen Aerogelen die Festigkeit des Aerogelmaterials nicht überschreiten. Im Fall von superflexiblen Aerogelen ist der Druck so anzupassen, dass kein Druckverformungsrest auftritt. Dabei ist der Druckbereich individuell zu wählen. Bei einem Probekörper von 150 x 150 x 5 mm³ liegt der beaufschlagte Druck beispielsweise in einem Bereich von 1 bis 10 bar, bevorzugt von 3 bis 5 bar.

In einer bevorzugten Ausführungsform wird das flüssige Bindemittel in eine offene oder geschlossene Form eingeleitet. Bevorzugt wird das Bindemittel durch einen eingeklebten Harzkanal eingeleitet. Das Bindemittel kann insbesondere von der tiefsten Stelle des Formbodens eingeleitet werden oder von einer anderen Stelle. Das eingeleitete flüssige Bindemittel infiltriert das textile Halbzeug und gegebenenfalls teilweise das Aerogelmaterial.

In einer alternativen Ausführungsform kann das flüssige Bindemittel auch zunächst mittels Gießen oder Streichen auf das textile Halbzeug und/oder das Aerogelmaterial aufgebracht werden, bevor diese miteinander in Kontakt gebracht werden. Nach dem Kontaktieren in Schritt iii) des erfindungsgemäßen Verfahrens erfolgt die Infiltration des textilen Halbzeugs und gegebenenfalls die teilweise Infiltration des Aerogelmaterials durch Kapillarkräfte.

Als flüssiges Bindemittelsystem kann beispielsweise ein Harzsystem, insbesondere ein Kunstharzsystem oder ein Bioharzsystem, eingesetzt werden. Geeignete Kunstharzsysteme oder Bioharzsysteme umfassen beispielsweise Epoxidharze, Polyesterharze (gesättigte und ungesättigte Vertreter), Vinylesterharze, Phenol-Formaldehydharze, Melamin-Formaldehydharze, Urea-Formaldehydharze, Diallylphthalatharze, Methacrylatharze, Polyurethanharze, Aminoharze, Furanharze, Ligninharze oder deren Mischungen.

Besonders für den Einsatz als flüssige Bindemittel in dem erfindungsgemäßen Verfahren geeignete kommerziell erhältliche Harzsysteme sind Biresin^{®} CR80 der Firma Sika Deutschland GmbH oder HexFlow^{®} RTM6/RTM6-2 der Firma Hexcel Composites. Auch Schmelzklebstoffe sind für diesen Zweck anwendbar.

Das Bindemittel kann aus einer Komponente bestehen oder mehrere Komponenten umfassen. Insbesondere kann dem Bindemittel ein Härter, Beschleuniger, Füllstoffe und/oder weitere Hilfsmittel zugesetzt werden.

Erfindungsgemäß wird das eingesetzte textile Halbzeug mit dem flüssigen Bindemittel vollständig infiltriert. Das eingesetzte Aerogelmaterial kann teilweise mit dem flüssigen Bindemittel infiltriert werden, um die Stabilität in der Grenzschicht zwischen dem Textil- und dem Aerogelmaterial des Verbundkörpers zu verbessern. Die Eindringtiefe des Bindemittels in die Oberfläche des Aerogelmaterials ist allerdings möglichst gering zu halten, um die vorteilhaften Eigenschaften des Aerogels, insbesondere dessen Dichte und Wärmeleitfähigkeit, zu erhalten. Die Eindringtiefe kann beispielsweise durch die Viskosität des eingesetzten flüssigen Bindemittels, durch die Topfzeit des Bindemittels, oder durch die Temperaturführung kontrolliert werden. Insbesondere beeinflusst die Temperatur auch die Viskosität des flüssigen Bindemittels.

Um ein teilweises Infiltrieren des Aerogelmaterials mit dem flüssigen Bindemittel zu ermöglichen, muss ein mit dem eingesetzten Aerogelmaterial kompatibles Bindemittel ausgewählt werden. Die Kompatibilität ergibt sich einerseits aus dem durchschnittlichen Polymersationsgrad (degree of Polymerization DP) des Kunststoffharzes, da die Größe des Polymerknäuls gegebenenfalls ein Eindringen des Harzsystems in das Netzwerk des Aerogels unterbindet. Andererseits bedeutet Kompatibilität in diesem Bezug auch eine chemische Ähnlichkeit die als Voraussetzung gegeben ist. So sind hydrophobe Aerogele auch mit hydrophoben Bindemitteln verträglich. Das Vorhandensein ähnlicher funktioneller Gruppen ist von Vorteil. Insbesondere kann ein flüssiges Bindemittel ausgewählt werden dessen Viskosität ein teilweises Infiltrieren eines Aerogelmaterials ermöglicht.

Die Viskosität des flüssigen Bindemittels kann in einer bevorzugten Ausführungsform beispielsweise 5 mPa*s bis 50 Pa*s betragen. Bevorzugt ist die Viskosität 1 bis 10 Pa*s. Ganz besonders bevorzugt sind Viskositäten von 4 bis 8 Pa*s. Insbesondere kann ein flüssiges Bindemittel mit einer Viskosität von 2 bis 5 Pa*s eingesetzt werden, wenn als Aerogelmaterial ein monolithisches Aerogel eingesetzt wird. Wird ein Aerogelgranulat eingesetzt, kann insbesondere ein flüssiges Bindemittel mit einer Viskosität von 6 bis 10 Pa*s eingesetzt werden, wobei Bindemittel mit Viskositäten von 7 bis 8 Pa*s besonders bevorzugt sind.

Die Viskosität des eingesetzten flüssigen Bindemittels sollte so hoch gewählt werden, dass eine vollständige Infiltration des Aerogels durch Kapillarkräfte vermieden wird. Dabei besteht auch die Möglichkeit der Verwendung von Bindemitteln mit besonders kurzen Härtungszeiten (im Bereich weniger Minuten), welche die Eindringtiefe mittels schneller Aushärtung limitieren. Eine geringe Eindringtiefe von wenigen Prozent des Gesamtquerschnitts des Aerogelmaterials wird für eine Kraftübertragung unter Erhalt der Aerogelstruktur bevorzugt, insbesondere wenn ein monolithisches Aerogelmaterial eingesetzt wird. Es wird gerade so viel Bindemittel eingeleitet, dass das Bindemittel in Kontakt mit dem Aerogel gelangt. Dabei ist sicherzustellen, dass die Infiltration des textilen Halbzeugs vollständig erfolgt. Insbesondere wenn das Aerogelmaterial Fasern und/oder textile Erzeugnisse enthält, kann so viel Bindemittel eingeleitet werden bis es in umhüllenden Kontakt mit den Fasern und/oder textilen Erzeugnissen steht.

In einer bevorzugten Ausführungsform wird das Infiltrieren des eingesetzten Aerogelmaterials bis zu einer Eindringtiefe von weniger als 15%, besonders bevorzugt weniger als 10%, bezogen auf den Querschnitt des eingesetzten Aerogelmaterials, durchgeführt. Insbesondere kann die Eindringtiefe in einem Bereich von 5 bis 8%, bezogen auf den Querschnitt des Aerogelmaterials, liegen. Insbesondere wenn das Aerogelmaterial Fasern und/oder textile Erzeugnisse enthält, die aus dem Aerogelmaterial herausragen und mit den Fasern des textilen Halbzeug in Kontakt stehen, kann die Eindringtiefe des flüssigen Bindemittels in das Volumen des Aerogelmaterials auch 0% betragen.

Unter dem Querschnitt des Aerogelmaterials im Sinne der vorliegenden Erfindung wird dessen Ausdehnung zwischen zwei Oberflächen des Materials verstanden. Wird ein monolithisches Aerogelmaterial eingesetzt, bezeichnet der Querschnitt insbesondere die Schichtdicke des Aerogelmaterials in der Ebene des textilen Halbzeugs. Wird ein Aerogelgranulat eingesetzt, bezeichnet der Querschnitt insbesondere den Durchmesser eines einzelnen Aerogelgranulatkorns.

Während grundsätzlich eine geringe relative Eindringtiefe in das Volumen des Aerogelmaterials bevorzugt ist, um möglichst die vorteilhaften Eigenschaften des Aerogelmaterials zu erhalten, erfordert die ebenfalls bevorzugte feste Verbindung zwischen dem Aerogelmaterial in dem textilen Halbzeug eine gewisse absolute Eindringtiefe des flüssigen Bindemittels. Die bevorzugte relative Eindringtiefe hängt damit auch von der absoluten Schichtdicke des Aerogelmaterials ab.

Insbesondere wenn ein Aerogelmaterial mit einer Schichtdicke von 2 mm eingesetzt wird, liegt die bevorzugte Eindringtiefe in einem Bereich von 0,01 bis 15 %, besonders bevorzugt zwischen 6 und 10 %, bezogen auf den Querschnitt des Aerogelmaterials. Wird hingegen beispielsweise ein Aerogelmaterial mit einer Schichtdicke von 50 mm eingesetzt, liegt die Eindringtiefe vorzugsweise in einem Bereich von 8 bis 15 % bezogen auf den Querschnitt des Aerogelmaterials. Wird beispielsweise ein Aerogelmaterial mit einer Schichtdicke von 15 mm eingesetzt, liegt die Eindringtiefe vorzugsweise in einem Bereich von 5 bis 10 % bezogen auf den Querschnitt des Aerogelmaterials. Für andere Schichtdicken liegt die bevorzugte Eindringtiefe entsprechend vorzugsweise zwischen den genannten Werten beziehungsweise oberhalb oder unterhalb dieser Werte.

Im weiteren Prozess wird das Bindemittel ausgehärtet. Hierzu kann die Temperatur erhöht werden, insbesondere wenn eine Form eingesetzt wird. Die Dauer des Härtungszyklus sollte dabei angepasst werden, um der geringeren Wärmeleitfähigkeit des eingesetzten Aerogels entgegenzuwirken. Wird eine Form eingesetzt, kann diese für eine bessere Bündigkeit zusammengepresst werden. Nach vollständiger Aushärtung des Bindemittels kann die Form entlastet und der erzeugte Verbundkörper der Form entnommen werden. Für superflexible Silica Aerogele kann die Entlastung auch vor der Aushärtung erfolgen, sofern die ursprüngliche Höhe des Aerogelmaterials zu erreichen gewünscht ist.

Insbesondere wenn als Aerogelmaterial ein Aerogelgranulat in Kombination mit Stapelfasern auf Thermoplast-Basis eingesetzt wird, ist es bevorzugt auf geeignete Temperaturen aufzuheizen, um die polymeren Stapelfasern zwischen den Aerogelgranulatkörnern aufschmelzen zu können. Auch die Nutzung von Strahlern (Infrarotstrahlung, Röntgenstrahlen oder Radiofrequenzen) kann zum Aufschmelzen enthaltener thermoplastischer Stapelfasern verwendet werden. Durch das aufgeschmolzene Polymer zwischen den Aerogelgranulatkörnern wird nach dem Abkühlen und Erstarren des Polymers ein kraftschlüssiger Verbund zwischen den Aerogelgranulatkörnern hergestellt.

Alternativ kann als Form auch ein Vakuumsack oder -beutel eingesetzt werden. Die Erfindung ist jedoch nicht auf den Einsatz von Vakuum oder Druck beschränkt. Es kann beispielsweise auch eine offene Form eingesetzt werden, die mit dem flüssigen Bindemittel ausgegossen wird. Die Aushärtung des Bindemittels kann auch mittels Heißpressen durchgeführt werden.

Weitere Temperaturbehandlungen können zum Nachhärten des Verbundkörpers nötig sein. Insbesondere wenn als flüssiges Bindemittel ein duroplastisches Harzsystem eingesetzt wird, ist eine weitere Wärmebehandlung erforderlich, um den Härtungszyklus des jeweiligen Herstellers einzuhalten.

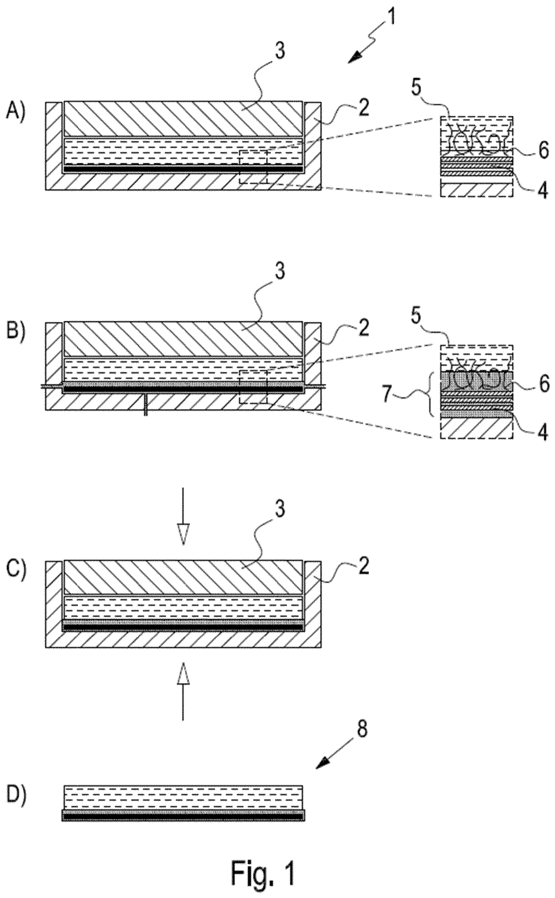

Figur 1 zeigt eine Ausführungsform (1) des erfindungsgemäßen Verfahren mit einem monolithischen Aerogelmaterial. In einem ersten Schritt (A) wird in einer Form (2) ein textiles Halbzeug (4) vorgelegt. Ein monolithisches Aerogelmaterial (5), welches aus diesem herausragende Fasern (6) umfasst, wird lose auf das textile Halbzeug (4) aufgelegt, wobei die Fasern (6) mit dem textilen Halbzeug (4) in Kontakt treten und teilweise mit diesem überlappen. Anschließend wird die Form (2) durch Auflegen des Gegenstücks (3) geschlossen. In einem weiteren Schritt (B) wird ein flüssiges Bindemittel (7) in die Form eingeleitet. Dabei wird das textile Halbzeug (4) vollständig mit dem flüssigen Bindemittel (7) infiltriert. Das monolithische Aerogelmaterial (5) und die Fasern (6) werden teilweise mit dem flüssigen Bindemittel (7) infiltriert. In einem weiteren Schritt (C) wird die Temperatur erhöht und von außen Druck auf die Form ausgeübt. Dabei härtet das flüssige Bindemittel aus. Im finalen Schritt (D) wird der fertige Verbundkörper (8) bei Raumtemperatur aus der Form entnommen.

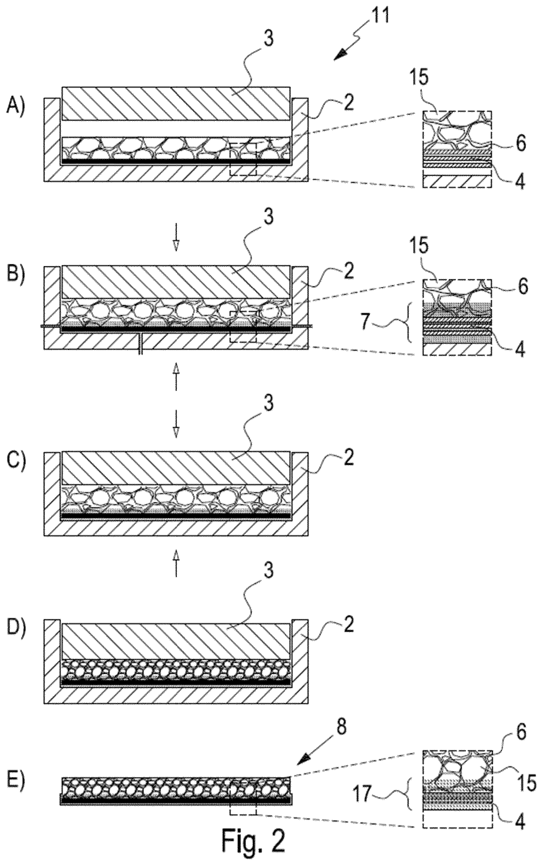

Figur 2 zeigt eine weitere Ausführungsform (11) des erfindungsgemäßen Verfahrens mit einem Aerogelgranulat. In einem ersten Schritt (A) wird in einer Form (2) ein textiles Halbzeug (4) vorgelegt. Auf das textile Halbzeug (4) wird ein Aerogelgranulat (15), welches thermoplastische Stapelfasern (6) enthält, lose aufgebracht. Durch Auflegen des Gegenstücks (3) wird die Form geschlossen. Im nächsten Schritt (B) wird ein flüssiges Bindemittel (7) in die Form eingeleitet. Dabei wird das textile Halbzeug (4) vollständig mit dem flüssigen Bindemittel (7) infiltriert. Das Aerogelgranulat (15) sowie die Stapelfasern (6) werden teilweise mit dem flüssigen Bindemittel (7) infiltriert. In einem weiteren Schritt (C) wird die Temperatur erhöht und von außen Druck auf die Form ausgeübt. Es schließt sich in einem Schritt (D) eine weitere Wärmebehandlung an, wobei die Temperatur über die im vorangegangenen Schritt (C) eingestellte Temperatur erhöht. Die thermoplastischen Stapelfasern (6) schmelzen und verbinden das Aerogelgranulat kraft- und formschlüssig. Im finalen Schritt (E) wird der fertige Verbundkörper (8) bei Raumtemperatur aus der Form entnommen. Das ausgehärtete Bindemittel (17) erstreckt sich über das textile Halbzeug (4), sowie einen Teil des Aerogelgranulats (15) und des verfestigten Thermoplasten (6).

Ein einer weiteren Ausführungsform wird die erfindungsgemäße Aufgabenstellung gelöst durch einen Verbundkörper, der Aerogel und ein faserverstärktes Bauteil umfasst, erhältlich nach dem zuvor beschriebenen erfindungsgemäßen Verfahren. Die erfindungsgemäßen Verbundkörper können vielfältig Anwendung finden, insbesondere als Dämmmaterial, beispielsweise in der Automobilindustrie, der thermischen Isolation technischer Anlagen, der Luft- und Raumfahrt sowie im maritimen Bereich. Durch die Kombination des Aerogelmaterials mit dem faserverstärkten Bauteil wird der Aerogelwerkstoff in einer handhabbaren Form bereitgestellt. Als Dämmmaterial im Automobilbereich können die erfindungsgemäßen Verbundkörper beispielsweise vorteilhaft eingesetzt werden, wobei das faserverstärkte Bauteile eine optische ansprechende äußere Schicht bildet, hinter der eine verborgene funktionale Aerogelschicht liegt.

### Ausführungsbeispiele

### Beispiel 1

Es wurde eine Polyethylen-Folie als Unterlage verwendet, diese wurde auf eine Stahlplatte geklebt. Darauf wurde ein Gelege aus Kohlefaser (CF-Gelege, HT-Faser, 0/90) vorgelegt. Nach Anrühren und Entlüften eines 2-K-Epoxidharzsystems (Biresin^{®}, Fa. SIKA, Produkte: Biresin^{®}CR80 + Biresin^{®}CH80-6) wurde das CF-Gelege großzügig mit einem leichten Überschuss an Harz bestrichen. Darauf wurde ein unverstärktes flexibles Silica-Aerogel platziert und nochmals großzügig mit dem Epoxidharz verstrichen, anschließend mit einem weiteren CF-Gelege bedeckt und nochmals mit Harz bestrichen. Final wurde zur Abbildung einer glatten Oberfläche mit einer Lage glattgestrichener Polyethylen-Folie bedeckt. Diese 13 mm hohe Schichtung wurde zwischen zwei PTFE-Bleche (3 mm Stärke) bei 45 °C, über 4 Stunden im Ofen ausgehärtet, wobei sich die Höhe unter der Last des PTFE-Blechs auf 11 mm reduzierte. Nach dem Härtungszyklus wurde der erhaltene Verbundkörper entformt. Nach Abnehmen der beschwerenden PTFE-Platte füllte sich der Porenraum des flexiblen Silica-Aerogels erneut mit Luft und ein final 12 mm hoher Verbundkörper wurde erhalten. Die Eindringtiefe des Epoxidharzes betrug insgesamt max. 10 % der Höhe des eingesetzten flexiblen Silica-Aerogels. Erhalten werden Verbundkörper von außergewöhnlich niedriger Dichte zwischen 0,47 - 0,49 g cm⁻³.

### Beispiel 2

Es wurde ein Gelege aus Kohlefaser (CF-Gelege) (HT-Faser, 0/90) vorgelegt. Darauf wurde eine Platte flexiblen Silica-Aerogels (entsprechend DE 10 2015 200 191 A1) gelegt und oberseitig mit einem weiteren CF-Gelege bedeckt. Dabei ragte das CF-Gelege 6 mm über die Kanten des Aerogels hinaus, hinreichend, um eine Kapselung zu erzielen. Auf beiden Seiten bildet ein Abreißgewebe die äußerste Schicht, wie es aus der Herstellung von Faser-Verbundwerkstoffen bekannt ist. Diese Schichtung wurde in einem Vakuum-Aufbau platziert und evakuiert. Um eine hinreichende Haftung zu begünstigen wurde an den Oberflächen adsorbiertes Wasser mittels Evakuieren entfernt. Zusätzlich wurde mit Temperatur beaufschlagt. Als Bindemittel wurde RTM6 der Firma Hexcel verwendet. In diesem Fall wurde der Vakuumaufbau auf 95 °C temperiert. Das 1K-Epoxidharz wurde auf 75-80 °C vortemperiert, über die Infiltrationsdauer stabil gehalten und der Zulauf in das Harz getaucht. Der Harzkanal wurde nach 60-minütiger Vorbehandlung an der Klemme am Anguss gelöst und die Infiltration begann. Innerhalb von 30-40 Minuten wurde der Schichtaufbau mit Harz getränkt. Der Harzkanal wurde dann mittels Klemme wieder geschlossen und die Temperatur des Vakuumaufbaus schrittweise auf 180 °C erhöht. Die Gelation des Epoxidharzes trat innerhalb von 45 Minuten ein, wurde jedoch in Anlehnung an die Verarbeitungsanweisung des Herstellers über 140 Minuten bei 180 °C gehalten. Anschließend wurde der Vakuumsack entfernt und der Verbundkörper konnte entformt werden. Hierzu wurde das Abreißgewebe an einer Ecke erst vorsichtig gelöst und, sobald gut greifbar, von der CFK-Oberfläche gerissen. Erhalten wurde somit ein beidseitig, vom Abreißgewebe, leicht profilierter Verbundkörper. Durch das enthaltene flexible Silica-Aerogel behält der Verbundkörper in gewissem Maße seine flexiblen Eigenschaften bei und kann bis zu 45 % komprimiert werden, findet jedoch immer wieder in den Ausgangszustand zurück. Die Probenhöhe ist verglichen mit der Höhe der ursprünglichen Schichtung um bis zu 25 % vermindert. Die Eindringtiefe des Matrixmaterials beträgt 10 - 15 %.

### Beispiel 3

Als Unterlage diente ebenso wie in Beispiel 1 eine PE-Folie welche auf eine StahlPlatte geklebt wurden. Darauf wird erst ein Abreißgewebe platziert, das deutlich größer ist als der zu fertigende Verbundkörper. Auf das Abreißgewebe wird ein Carbonfasergelege gelegt. Darauf wurde mittels geeigneter Klebung oder Inlays eine Vertiefung für eine Granulat-Schüttung bereitet. Diese wurde mit einem CF-Gelege ausgekleidet und mit Silica-Aerogel (Firma Cabot, Eigenschaften in oben angeführter Tabelle) zur gewünschten Höhe gefüllt und mit einem weiteren CF-Gelege bedeckt. In vorliegendem Beispiel betrug die Höhe 11 mm. Oberseitig wurde abschließend Abreißgewebe aufgetragen und der Aufbau in einen Vakuumsack gepackt und evakuiert. Das verwendete Bindemittel war Biresin^{®} der Firma SIKA. Es wurde entsprechend der Verarbeitungsanweisung des Herstellers gearbeitet (Biresin^{®}CR80 + Biresin^{®}CH80-1). Für die Gelation und Aushärtung dieses 2-K-Systems wurde das Epoxidharz bei Raumtemperatur verarbeitet. Die Aushärtungsdauer betrug 50-60 Minuten. Eine Nachbehandlung war nicht erforderlich. Zur Entformung wurde nach Abnehmen des Vakuumsacks das Abreißgewebe an einer Ecke erst vorsichtig gelöst und, sobald gut greifbar, von der CFK-Oberfläche gerissen. Erhalten wurde ein beidseitig, vom Abreißgewebe, leicht profilierter und steifer Verbundkörper. Die finale Probenhöhe beträgt 10 mm. Der Verbundkörper ist von geringer Dichte (0,59 g cm⁻³).

## Patentansprüche

1. Verfahren zur Herstellung eines Verbundkörpers, der Aerogel und ein faserverstärktes Bauteil umfasst, umfassend die folgenden aufeinander folgenden Schritte:
i) Bereitstellen mindestens eines textilen Halbzeugs,
ii) Kontaktieren des mindestens einen textilen Halbzeugs mit mindestens einem Aerogelmaterial,
iii) Infiltrieren des eingesetzten textilen Halbzeugs, und teilweises Infiltrieren der eingesetzten Aerogelmaterialien, mit einem flüssigen Bindemittel und
iv) Aushärten des Bindemittels.

2. Verfahren nach Anspruch 1, wobei mindestens zwei textile Halbzeuge eingesetzt werden, die in Schritt ii) mit mindestens einem Aerogelmaterial so in Kontakt gebracht werden, wobei die textilen Halbzeuge das Aerogelmaterial in Form eines Sandwiches umgeben.

3. Verfahren nach Anspruch 1 oder 2, wobei das mindestens eine textile Halbzeug ein Gelege, ein Florgewebe, ein Polgewebe, ein Geflecht, ein Vlies, ein Gewebe, ein Gewirke, ein Gestrick, Stapelfasern oder ein Gemisch davon umfasst.

4. Verfahren nach einem der Ansprüche 1 bis 3, wobei das mindestens eine textile Halbzeug Naturfasern, polymere Fasern, mineralische Fasern, Kohlefasern, Keramikfasern oder deren Mischungen umfasst.

5. Verfahren nach einem der Ansprüche 1 bis 4, wobei als Aerogelmaterial offenporige Körper auf Basis von Polysacchariden, Duroplasten, Metalloxiden, Halbmetalloxiden und/oder Übergangsmetalloxiden, insbesondere auf Basis von Silica, Resorcin-Formaldehyd und/oder Cellulose, eingesetzt werden.

6. Verfahren nach einem der Ansprüche 1 bis 5, wobei mindestens ein Aerogelmaterial in Form eines monolithischen Körpers oder in Form eines Granulats eingesetzt wird.

7. Verfahren nach einem der Ansprüche 1 bis 6, wobei mindestens ein Aerogelmaterial Fasern und/oder textile Erzeugnisse enthält, die aus der Oberfläche des Aerogelmaterials herausragen, und man das Aerogelmaterials mit einem oder mehreren textilen Halbzeugen so in Kontakt bringt, dass die Fasern des Halbzeugs mit den Fasern und/oder textilen Erzeugnissen aus dem Aerogelmaterial in Kontakt treten.

8. Verfahren nach einem der Ansprüche 1 bis 7, wobei man die textilen Halbzeuge und die Aerogelmaterialien innerhalb einer Form in Kontakt bringt, insbesondere indem man sie nacheinander in eine Form einbringt.

9. Verfahren nach Anspruch 8, wobei man die Form nach dem Einbringen der textilen Halbzeuge und der Aerogelmaterialien schließt und anschließend vorwärmt, evakuiert und/oder mit Druck beaufschlagt.

10. Verfahren nach Anspruch 8 oder 9, wobei das flüssige Bindemittel in eine offene oder geschlossene Form eingeleitet wird, insbesondere von der tiefsten Stelle des Formbodens aus oder durch einen eingeklebten Harzkanal.

11. Verfahren nach einem der Ansprüche 1 bis 10, wobei das flüssige Bindemittel ein Harzsystem, insbesondere einen Epoxidharz, umfasst.

12. Verfahren nach einem der Ansprüche 1 bis 11, wobei das flüssige Bindemittel eine Viskosität von 1 bis 10 Pa*s aufweist.

13. Verfahren nach einem der Ansprüche 1 bis 12, wobei das teilweise Infiltrieren der eingesetzten Aerogelmaterialien bis zu einer Eindringtiefe des flüssigen Bindemittels in die Aerogelmaterialien von 0,01% bis zu 15%, insbesondere von 5% bis zu 10%, bezogen auf den Querschnitt des Aerogelmaterials durchgeführt wird.

14. Verbundkörper umfassend Aerogel und ein faserverstärktes Bauteil, erhältlich nach dem Verfahren gemäß einem der Ansprüche 1 bis 13.

## Claims

1. A process for producing a composite body comprising an aerogel and a fiber-reinforced component, comprising the following successive steps:
i) providing at least one semifinished textile fabric,
ii) contacting said at least one semifinished textile fabric with at least one aerogel material,
iii) infiltrating said semifinished textile fabric employed, and partially infiltrating said aerogel materials employed, with a liquid binder, and
iv) curing the binder.

2. The process according to claim 1, wherein at least two semifinished textile fabrics are employed, which are thus contacted with at least one aerogel material in step ii), wherein said semifinished textile fabrics sandwich said aerogel material.

3. The process according to claim 1 or 2, wherein said at least one semi-finished textile fabric comprises a scrim, a pile fabric, a braid, a nonwoven fabric, a woven fabric, a loop-formingly knitted fabric, a loop-drawingly knitted fabric, staple fibers or a mixture thereof.

4. The process according to any of claims 1 to 3, wherein said at least one semi-finished textile fabric comprises natural fibers, polymeric fibers, mineral fibers, carbon fibers, ceramic fibers, or mixtures thereof.

5. The process according to any of claims 1 to 4, wherein open-pore bodies based on polysaccharides, duroplasts, metal oxides, semi-metal oxides and/or transition metal oxides, in particular based on silica, resorcinol-formaldehyde and/or cellulose, are employed as said aerogel material.

6. The process according to any of claims 1 to 5, wherein at least one aerogel material in the form of a monolithic body or in the form of granules is employed.

7. The process according to any of claims 1 to 6, wherein at least one aerogel material contains fibers and/or textile products that protrude from the surface of said aerogel material, and said aerogel material is contacted with one or more semifinished textile fabrics in such a way that the fibers of the semifinished product contact the fibers and/or textile products from said aerogel material.

8. The process according to any of claims 1 to 7, wherein said semifinished textile fabrics and said aerogel materials are contacted within a mold, especially by inserting them successively into one mold.

9. The process according to claim 8, wherein after inserting said semifinished textile fabrics and said aerogel materials, the mold is closed and are subsequently preheated, evacuated and/or pressurized.

10. The process according to claim 8 or 9, wherein said liquid binder is introduced into an open or closed mold, especially from the lowest position of the mold bottom, or through an adhesive-bonded resin conduit.

11. The process according to any of claims 1 to 10, wherein said liquid binder includes a resin system, especially an epoxy resin.

12. The process according to any of claims 1 to 11, wherein said liquid binder has a viscosity of from 1 to 10 Pa·s.

13. The process according to any of claims 1 to 12, wherein said partially infiltrating of the aerogel materials employed is performed to a penetration depth of said liquid binder into said aerogel materials of from 0.01% to 15%, especially from 5% to 10%, based on the cross-section of the aerogel material.

14. A composite body, comprising an aerogel and a fiber-reinforced component, obtainable by the process according to any of claims 1 to 13.

## Revendications

1. Procédé pour produire un corps composite comprenant un aérogel et un composant renforcé de fibres, comprenant les étapes successives consistant à
i) fournir au moins un produit textile semi-fini,
ii) mettre ledit au moins un produit textile semi-fini en contact avec au moins un matériau aérogel,
iii) infiltrer le produit textile semi-fini utilisé et partiellement infiltrer les matériaux aérogels utilisés avec un liant liquide, et
iv) faire durcir le liant.

2. Procédé selon la revendication 1, dans lequel au moins deux produits textiles semi-finis sont utilisés, qui sont ainsi mis en contact avec au moins un matériau aérogel dans l'étape ii), dans lequel les produits textiles semi-finis entourent ledit matériau aérogel en forme de sandwich.

3. Procédé selon la revendication 1 ou 2, dans lequel ledit au moins un produit textile semi-fini comprend un canevas, un tissu à poils, une tresse, un non-tissé, un tissu tissé, un tissu à mailles, un tissu tricoté, des fibres discontinues ou un mélange de ceux-ci.

4. Procédé selon l'une quelconque des revendications 1 à 3, dans lequel ledit au moins un produit textile semi-fini comprend des fibres naturelles, fibres polymères, fibres minérales, fibres de carbone, fibres céramiques, ou des mélanges de celles-ci.

5. Procédé selon l'une quelconque des revendications 1 à 4, dans lequel des corps à pores ouverts à base de polysaccharides, de thermodurcissables, d'oxydes métalliques, d'oxydes semi-métalliques et/ou d'oxydes de métaux de transition, en particulier à base de silice, de résorcinol-formaldéhyde et/ou de cellulose, sont utilisés comme matériau aérogel.

6. Procédé selon l'une quelconque des revendications 1 à 5, dans lequel au moins un matériau aérogel est utilisé sous forme de corps monolithique ou sous forme de granulés.

7. Procédé selon l'une quelconque des revendications 1 à 6, dans lequel au moins un matériau aérogel contient des fibres et/ou des produits textiles qui dépassent de la surface du matériau aérogel, et ledit matériau aérogel est mis en contact avec un ou plusieurs produits textiles semi-finis de manière que les fibres dudit produit textile semi-fini entrent en contact avec les fibres et/ou produits textiles provenant du matériau aérogel.

8. Procédé selon l'une quelconque des revendications 1 à 7, dans lequel les produits textiles semi-finis et les matériaux aérogels sont mis en contact au sein d'un moule, notamment en les introduisant dans un moule l'un après l'autre.

9. Procédé selon la revendication 8, dans lequel le moule est fermé après l'introduction des produits textiles semi-finis et des matériaux aérogel, et ensuite est préchauffé, mis sous vide et/ou pressurisé.

10. Procédé selon la revendication 8 ou 9, dans lequel le liant liquide est introduit dans un moule ouvert ou fermé, notamment à partir du point le plus profond du fond du moule ou à travers un canal de résine collé.

11. Procédé selon l'une quelconque des revendications 1 à 10, dans lequel le liant liquide comprend un système de résine, notamment une résine époxy.

12. Procédé selon l'une quelconque des revendications 1 à 11, dans lequel le liant liquide présente une viscosité de 1 à 10 Pa·s.

13. Procédé selon l'une quelconque des revendications 1 à 12, dans lequel l'infiltration partielle des matériaux aérogels utilisés est réalisée jusqu'à une profondeur de pénétration du liant liquide dans les matériaux aérogels de 0,01 % à 15 %, en particulier de 5 % à 10 %, par rapport à la section transversale du matériau aérogel.

14. Corps composite, comprenant un aérogel et un composant renforcé de fibres, pouvant être obtenu par le procédé selon l'une quelconque des revendications 1 à 13.
